# EUROPÄISCHE PATENTANMELDUNG

(11) **EP 2 009 362 A2**
(43) Veröffentlichungstag der Anmeldung: **31.12.2008**
(21) Anmeldenummer: 08009810.6
(22) Anmeldetag: 29.05.2008
(51) Int. Cl.: F24F 13/075

(54) **Lamelle für eine Luftdüse**

(30) Priorität: 25.06.2007 DE 202007008947 U
(71) Anmelder: REUM GmbH & Co. Betriebs KG, 74736 Hardheim (DE)
(72) Erfinder: Weinmann, Michael, 74731 Walldürn (DE); Langer, Franz, 55276 Oppenheim (DE)
(74) Vertreter: Maser, Jochen

(57) **Zusammenfassung**

Die Erfindung betrifft eine Lamelle für eine Lamellenanordnung (16) in einem Gehäuse (12) einer Luftdüse (11) mit einer vorderen Luftaustrittsöffnung (14) und einem Anschluss an einem Luftzuführungsschacht, wobei die Lamelle (17) als Verbundbauteil aus einer Tragstruktur (27) und zumindest einer die Tragstruktur (27) zumindest abschnittsweise umgebenden Umhüllung (28) hergestellt ist und sowohl die zumindest eine Tragstruktur (27) als auch die Umhüllung (28) aus Kunststoff bestehen, wobei die Tragstruktur (27) aus einem nicht galvanisierbaren Kunststoff und die zumindest eine, wenigstens abschnittsweise ausgebildete Umhüllung (28) aus einem galvanisierbaren Kunststoff hergestellt ist, die wenigstens abschnittsweise ausgebildete Umhüllung (28) eine Galvanisierungsschicht (29) umfasst und auf der Galvanisierungsschicht (29) zumindest ein Metallüberzug (31) oder eine Lackschicht vorgesehen ist.

## Beschreibung

Die Erfindung betrifft eine Lamelle für eine Lamellenanordnung in einem Gehäuse einer Luftdüse gemäß dem Oberbegriff des Anspruchs 1.

Aus der DE 20 2006 004 052 U1 ist eine Lamelle für eine Luftdüse bekannt geworden, welche ein Gehäuse mit einer vorderen Luftaustrittsöffnung und einen Anschluss an einem Luftzuführschacht umfasst. Eine solche Lamelle weist an deren Stirnseiten jeweils einen Lagerzapfen auf, durch welchen die Lamelle schwenkbeweglich im Gehäuse der Luftdüse gelagert ist. Diese Lamelle ist aus Kunststoff im Verbundspritzverfahren hergestellt. Hierzu wird als Einlegeteil ein metallisches Einlegeteil verwendet, welches als Stanz- oder Druckgussteil ausgebildet ist. Dieses metallische Einlegeteil dient zur Versteifung und erstreckt sich über die gesamte Länge der Lamelle. Ein solches Einlegeteil erhöht die Steifigkeit der Lamelle bei mechanischen Belastungen gegen Durchbiegen im Vergleich zu Lamellen, die üblicherweise nur aus einem Kunststoffmaterial hergestellt sind. Eine solche Lamelle weist den Nachteil auf, dass diese durch die Herstellung eines metallischen Stanz- oder Druckgussteils kostenaufwändig ist und darüber hinaus in der Anpassung an die hohen Designanforderungen nicht gerecht wird.

Der Erfindung liegt deshalb die Aufgabe zugrunde, eine Lamelle vorzuschlagen, welche mechanische Belastungen beim Betätigen der Lamelle aufnehmen kann und einer Eigenverformung mit zunehmender Lebensdauer entgegenwirkt, sowie eine einfache Anpassung an optische Gestaltungen ermöglicht.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Die erfindungsgemäße Ausgestaltung einer Lamelle, welche aus einer Tragstruktur und zumindest einer die Tragstruktur abschnittsweise umgebenden Umhüllung hergestellt ist, bei der die Tragstruktur aus einem nicht galvanisierbaren Kunststoff und die zumindest eine, wenigstens abschnittsweise, ausgebildete Umhüllung aus einem galvanisierbaren Kunststoff hergestellt ist, die mit einer Galvanisierungsschicht versehen ist und auf der zumindest ein Metallüberzug oder eine Lackschicht vorgesehen ist, weist den Vorteil auf, dass die für die Aussteifung der Lamelle erforderliche mechanische Festigkeit zumindest durch die Galvanisierungsschicht gegeben ist, wobei gleichzeitig eine vielfältige optische Gestaltungsmöglichkeit durch die Auswahl des zumindest einen Metallüberzuges und/oder einer darauf aufgebrachten Lackschicht ermöglicht ist. Diese als Verbundbauteil ausgebildete Lamelle weist darüber hinaus auch eine erhöhte Eigensteifigkeit gegen Eigenverformung auf.

Nach einer bevorzugten Ausgestaltung der Erfindung ist vorgesehen, dass die Galvanisierungsschicht aus Kupfer oder Nickel besteht. Dadurch kann eine hinreichende Verdichtung der Oberfläche der aus galvanisierbarem Kunststoff bestehenden Umhüllung gegeben sein, um eine höhere Festigkeit für das Verbundbauteil zu erzielen. Darüber hinaus sind diese Metalle besonders geeignet, um weitere Metallüberzüge durch Galvanisierung zu beschichten. Bevorzugt wird die aus galvanisierbarem Kunststoff bestehende Umhüllung in einem Bad mit einer starken oxidierenden Säure gebeizt und anschließend mit beispielsweise Zinn- und Edelmetallsalzlösungen, insbesondere Silber oder Palladium, aktiviert, bevor das chemische Verkupfern oder Vernickeln erfolgt. Durch den Aufbau der Lamelle als Verbundteil mit einer Tragstruktur aus nicht galvanisierbarem Kunststoff und einer zumindest abschnittsweise ausgebildeten Umhüllung aus einem galvanisierbarem Kunststoff wird des Weiteren ermöglicht, dass der Herstellungsprozess vereinfacht wird. Es bedarf zur Anpassung an verschiedene Designanforderungen keiner Maskierungen während des Herstellungsprozesses, da aufgrund der Auswahl des galvanisierbaren Kunststoffes, der an den nicht galvanisierbaren Kunststoff für das Trägermaterial angrenzt, bereits eine Abgrenzung gegeben ist.

Nach einer weiteren bevorzugten Ausgestaltung der Erfindung ist vorgesehen, dass der Metallüberzug aus Kupfer, Nickel, Chrom oder Gold besteht. In Abhängigkeit der Anforderungen an die optische Gestalt und Wertigkeit können verschiedene metallische Überzüge ausgewählt werden. Gleichzeitig können durch das Aufbringen von metallischen Überzügen Zusatzfunktionen ermöglicht werden, wie beispielsweise das Leiten von Strömen.

Nach einer bevorzugten Ausgestaltung der Erfindung ist vorgesehen, dass zwischen den Stirnseiten der Lamelle, welche in Längsrichtung die Lamelle begrenzen, die zumindest eine Umhüllung sich durchgehend erstreckt. Dabei kann sich die Umhüllung in Umfangsrichtung des Lamellenkörpers zumindest abschnittsweise erstrecken. Dadurch wird ein zwischen den Stirnseiten oder von einer zur anderen Stirnseite reichender versteifter Wandabschnitt ausgebildet, der die Aufnahme von mechanischen Belastungen ermöglicht. Somit können als Einlegeteil vorgesehene Versteifungselemente vermieden werden. Die zwischen den Stirnseiten sich erstreckende Umhüllung kann beispielsweise sich über ein Viertel oder über die Hälfte des Umfanges der Lamelle erstrecken. Ebenso können mehrere streifenförmige Umhüllungen über den Umfang verteilt vorgesehen sein, welche sich jeweils von Stirnseite zu Stirnseite erstrecken. Des Weiteren kann vorgesehen sein, dass die Umhüllung schalenförmig ausgebildet und deren Breite in Umfangsrichtung an die Optik anpassbar ist.

Die aus galvanisierbarem Kunststoff ausgebildete Umhüllung ist bevorzugt als dünne Schicht ausgebildet und auf der Tragstruktur zur Ausbildung der Lamelle vorgesehen. Dadurch kann eine schalenförmige Aussteifung erfolgen.

Alternativ kann vorgesehen sein, dass das Volumen der wenigstens einen Umhüllung größer als das Volumen der Tragstruktur ausgebildet ist. Dadurch kann ein im Querschnitt kleiner aber steifer Kern ausgebildet werden, der von der zumindest einen Umhüllung teilweise oder vollständig umgeben ist.

Nach einer weiteren bevorzugten Ausgestaltung der Erfindung ist vorgesehen, dass die an den jeweiligen Stirnseiten angeordneten Lagerzapfen aus nicht galvanisierbarem Kunststoff ausgebildet sind. Dadurch können definierte Lagerverhältnisse geschaffen werden.

Des Weiteren ist bevorzugt vorgesehen, dass die Tragstruktur ohne Zusatzstoffe versteifungsfrei ausgebildet ist. Durch die Ausgestaltung der zumindest abschnittsweise sich erstreckenden, die Tragstruktur umgebende Umhüllung mit einer Galvanisierungsschicht und zumindest einem Metallüberzug oder einer Lackschicht sind Zusatzstoffe, wie beispielsweise Glasfaser, Kohlefaser oder metallische Bestandteile, nicht erforderlich. Dadurch wird der Herstellungsprozess vereinfacht.

Die erfindungsgemäße Lamelle wird bevorzugt als Zwei- oder Mehrkomponenten-Spritzgussbauteil hergestellt. Durch die Vermeidung von zusätzlichen Einlegeteilen oder von erhöhten Anforderungen zum Spritzen von Kunststoff mit Glasfaseranteil kann eine einfache Herstellung der Lamelle ermöglicht werden. Um in einfacher Weise eine Anpassung an erhöhte mechanische Belastungen, aufwändige Geometrien oder optische Effekte zu ermöglichen, kann das Verbundbauteil auch als Mehrkomponentenspritzteil vorgesehen sein. Dabei können auch farblich von einander abweichende Kunststoffe eingesetzt werden.

Die Umhüllung ist bevorzugt aus einem ABS-Kunststoff oder einem PC/ABS-Kunststoff hergestellt. Durch die Auswahl dieser Kunststoffe und dem Erstreckungsbereich der Umhüllung sowohl in Längs- als auch in Umfangsrichtung der Lamelle werden die galvanisierbare Oberfläche der Lamelle und somit Festigkeitseigenschaften und optische Gestaltungen bestimmt.

Die Tragstruktur ist bevorzugt aus PC hergestellt. Sofern die Tragstruktur aus mehreren Bestandteilen aufgebaut ist, können zusätzlich noch weitere Kunststoffe als nicht galvanisierbare Kunststoffe eingesetzt werden. Die Tragstruktur kann zusätzlich verschiedene Einfärbungen aufweisen, so dass sowohl die zumindest eine Tragstruktur als auch die zumindest eine Umhüllung beziehungsweise Umhüllungsschicht farblich angepasst werden können.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Darstellung einer Luftdüse,
- Figur 2: eine perspektivische Darstellung einer erfindungsgemäßen Lamelle,
- Figur 3: eine perspektivische Darstellung einer alternativen Lamelle zu Figur 2 und
- Figur 4: eine perspektivische Ansicht einer weiteren alternativen Ausgestaltung einer Lamelle zu Figur 2.

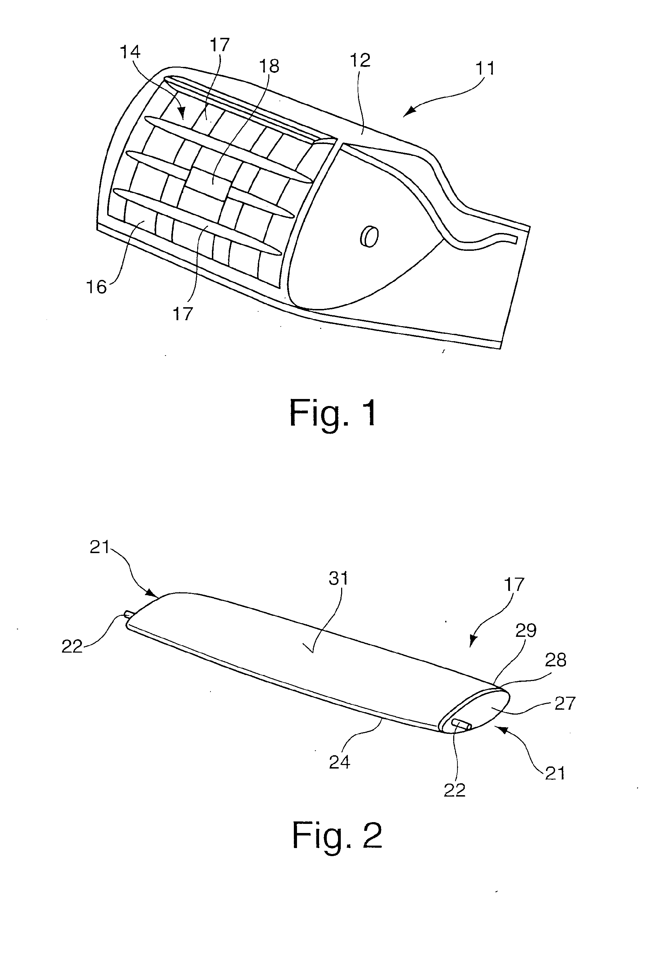

In Figur 1 ist schematisch eine Luftdüse 11 dargestellt, welche beispielsweise in einem Instrumententafelbauteil eines Kraftfahrzeuges als Mittel- oder Seitendüse vorgesehen sein kann. Diese Luftdüse 11 umfasst ein Gehäuse 12 mit einer vorderen Luftaustrittsöffnung 14, durch welche eine der Luftdüse 11 zugeführte Luftströmung austritt. Aus der Austrittsöffnung 14 der Luftströmung ist eine in der Luftaustrittsöffnung 14 einstellbare Lamellenanordnung 16 ermöglicht, welche durch horizontal und vertikal angeordnete Lamellen 17 ausgebildet ist. Alternativ kann die Lamellenanordnung 16 nur horizontal oder nur vertikal angeordnete Lamellen 17 umfassen. An einer mittleren horizontalen Lamelle 17 kann ein Einstellelement 18 angeformt oder aufgeklipst sein, welches eine Einstellung der Lamellenanordnung 16 bezüglich der Luftaustrittsrichtung ermöglicht.
In Figur 2 ist perspektivisch eine erfindungsgemäße Lamelle 17 dargestellt. Diese Lamelle 17 weist an deren Stirnseiten 21 einen Lagerzapfen 22 auf, der zur schwenkbaren Aufnahme der Lamelle 17 im Gehäuse 12 vorgesehen ist. Die Lamelle 17 weist eine in die Luftaustrittsöffnung 14 angeordnete Längskante 24 auf, welche aus einer keilförmigen oder spitz zulaufenden Ober- und Unterseite der Lamelle 17 ausgebildet ist. Eine gegenüberliegende Längsseite der Lamelle 17 ist beispielsweise wulst- oder halbkreisförmig ausgebildet, so dass im Querschnitt gesehen eine Lamelle 17 eine Art Tropfenform oder Flügelform aufweist. Diese wulst- oder halbkreisförmige Längskante weist in das Gehäuse 12 der Luftdüse 11. Dadurch kann eine verwirbelungsarme Luftausströmung erzielt werden. Gleichzeitig ist das optische Erscheinungsbild durch die dünn ausgebildete Längskante 24 in Luftaustrittsrichtung als filigrane Struktur verbessert. Die Anordnung der Lamelle 17 kann auch um 180° gedreht sein, so dass die dünne Längskante 24 gegen die Luftströmungsrichtung angeordnet ist.

Die in Figur 2 dargestellte Lamelle 17 ist beispielsweise als Zweikomponenten-Verbundteil ausgebildet. Die Lamelle 17 umfasst eine Tragstruktur 27, die aus einer oder mehreren Einzelstrukturen bestehen kann. Diese Tragstruktur 27 ist zumindest abschnittsweise von einer Umhüllung 28 umgeben. Die Tragstruktur 27 ist aus einem nicht galvanisierbaren Kunststoff, wie beispielsweise PC, hergestellt und kann anwendungsspezifisch eingefärbt werden. Die Tragstruktur 27 kann auch aus jeweils mehreren verschieden eingefärbten Einzelstrukturen bestehen. Darüber hinaus können die Einzelstrukturen auch aus verschiedenen Materialarten hergestellt sein. Die an die Tragstruktur 27 angeformten und gegenüber der Stirnseite 21 hervorstehenden Lagerzapfen 22 sind aus nicht galvanisierbarem Kunststoff hergestellt. Die beispielsweise gemäß Figur 2 dargestellte halbschalenförmig ausgebildete Umhüllung 28 beziehungsweise zumindest deren äußerste Schicht besteht aus nicht galvanisierbarem Kunststoff, vorzugsweise aus PC/ABS oder ABS. Auf diese Umhüllung 28 wird eine Galvanisierungsschicht 29 aufgebracht. Diese Galvanisierungsschicht 29 wird beispielsweise dadurch erzeugt, dass die Umhüllung 28 mit einer oxidierenden Säure gebeizt und anschließend mit Zinn- und Edelmetallsalzlösungen, wie beispielsweise Silber oder Palladium, aktiviert wird, so dass anschließend in speziell zusammengesetzten Bädern die Oberfläche der Umhüllung 28 chemisch verkupfert oder vernickelt wird. Auf diese Galvanisierungsschicht 29 wird anschließend zumindest ein Metallüberzug 31 aufgebracht. Beispielsweise können als Metallüberzüge Kupfer, Nickel, Chrom oder Gold, insbesondere galvanisch, aufgebracht werden. Bei der Verwendung von Chrom können unterschiedliche Einfärbungen vorgesehen sein.

Aufgrund der Ausgestaltung der Lamelle 17 aus nicht galvanisierbarem Kunststoff und galvanisierbarem Kunststoff wird ermöglicht, dass nur der galvanisierbare Kunststoff mit einer Galvanisierungsschicht 29 versehen und anschließend nur auf diese Galvanisierungsschicht 29 Metallüberzüge 31 aufgebracht werden können. Alternativ können auf diese Galvanisierungsschicht auch Lackschichten aufgebracht oder gedruckt werden. Bei den Lackschichten können Klarlackschichten, Ein- oder Mehrkomponenten-Lacke oder metallische Lacke vorgesehen sein. Diese Galvanisierungsschicht 29 und Metallüberzüge 31 schlagen sich nur auf der Oberfläche der Umhüllung 28 nieder. Somit können ohne Verwendung von Masken oder dergleichen gezielt und exakt die Galvanisierungsschicht 29 und anschließend zumindest ein Metallüberzug 31 aufgebracht werden. An dem nicht galvanisierbaren Kunststoff bleiben weder eine Galvanisierungsschicht 29 noch Metallüberzüge 31 haften. Analoges gilt für die Lackschicht.

Im Ausführungsbeispiel gemäß Figur 2 ist die Umhüllung 28 halbschalenförmig ausgebildet und erstreckt sich durchgehend von der einen Stirnseite 21 zur gegenüberliegenden Stirnseite 21 der Lamelle 17. Aufgrund dieser Ausgestaltung wird eine Festigkeitserhöhung für die Konturengeometrie der Lamelle 17 erzielt. Dadurch kann diese Lamelle 17 erhöhten mechanischen Belastungen Stand halten.

Die Querschnittsgeometrie der Umhüllung 28 kann sowohl in der Dicke als auch in der an die Tragstruktur 27 angrenzenden Flächenform beliebig ausgestaltet werden. Beispielsweise kann anstelle einer konkaven Grenzfläche zwischen Umhüllung 28 und Tragstruktur 27 auch eine konvexe Grenzfläche vorgesehen sein. Darüber hinaus können gezackte oder gewellte Grenzflächen zwischen der Tragstruktur 27 und der Umhüllung 28 vorgesehen werden.

Die Tragstruktur 27 kann alternativ aus mehreren Komponenten oder Einzelstrukturen aufgebaut werden, so dass beispielsweise im Kern ein Kunststoff mit einer sehr hohen Festigkeit und zwischen der Umhüllung 28 und dem Kern mit einer hohen Festigkeit eine weitere Kunststoffschicht ausgebildet werden, die aus einem mittelfesten oder weichen Kunststoff besteht, der zumindest bezüglich den durch die Umhüllung 28 nicht bedeckten Bereich aus nicht galvanisierbarem Kunststoff ausgebildet ist. Weitere davon abweichende Anordnungen sind anwendungsspezifisch möglich.

Auch die Umhüllung 28 kann mehrere Schichten mit verschiedenen Kunststoffmaterialien umfassen. Die äußerste Schicht der Umhüllung 28 ist jedoch aus galvanisierbarem Kunststoff auszubilden, um darauf die Galvanisierungsschicht 29 und zumindest einen Metallüberzug 31 oder Lackschicht aufzubringen.

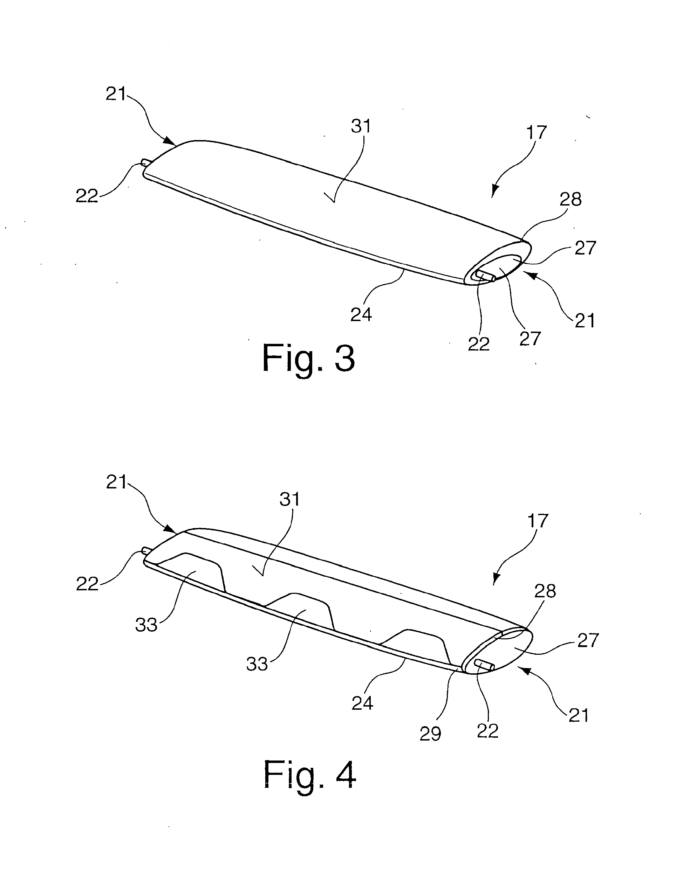

In Figur 3 ist eine alternative Ausführungsform der Lamelle 17 zu Figur 2 dargestellt. Bei dieser Ausführungsform ist die Tragstruktur 27 als relativ kleiner Kern dargestellt, an dem der Lagerzapfen 22 angeformt ist. Die Umhüllung 28, die aus einer oder mehreren Schichten oder Kunststoffen bestehen kann, nimmt ein größeres Querschnittsvolumen als das der Tragstruktur 27 ein. Dadurch kann eine im Wesentlichen über ¾ des Umfangs sich erstreckende Oberfläche der Umhüllung 28 aus einem galvanisierbaren Kunststoff ergeben, dass die Lamelle 17 bis auf einen schmalen Streifen zur Ausbildung einer Galvanisierungsschicht 29 mit der Aufbringung von zumindest einem Metallüberzug 31 oder einer Lackschicht vorgesehen ist. Dieser schmale nicht galvanisierbare Streifen wird durch die an den Außenumfang der Lamelle 17 angrenzende Tragstruktur 27 gebildet.

Alternativ kann vorgesehen sein, dass die Tragstruktur 27 durch die Umhüllung 28 zumindest in radialer Sicht vollständig umschlossen oder auch vollständig durch die Umhüllung 28 umgeben ist mit Ausnahme der gegenüber den Stirnseiten 21 hervorspringenden Lagerzapfen 22.

In Figur 4 ist eine weitere alternative Ausführungsform einer Lamelle 17 dargestellt. Bei dieser Lamelle 17 erstreckt sich die Umhüllung 28 zwischen den beiden Stirnseiten 21. Die Umhüllung 28 ist als Bogensegment dargestellt, welches sich beispielsweise nur entlang eines Viertels vom Umfang der Lamelle 17 erstreckt. Entlang der Längskanten 24 weist die Umhüllung 28 Aussparungen 33 auf, welche durch einen nicht galvanisierbaren Kunststoff ausgebildet sind. Dadurch kann abweichend von einer vollflächig ausgebildeten Umhüllung 28 über einen bestimmten Bereich eine Struktur, ein Muster oder dergleichen zur Erzielung von definierten optischen Gestaltungen ausgebildet werden, um gezielte optische Effekte zu erzielen. Bei einer solchen Ausführungsform gemäß Figur 4 bleibt die Festigkeitserhöhung erhalten, da sich diese Galvanisierungsschicht 29 und zumindest ein Metallüberzug 31 oder eine Lackschicht zwischen den Stirnseiten 21 der Lamelle 17 erstreckt und diese aussteifen.

## Patentansprüche

1. Lamelle für eine Lamellenanordnung (16) in einem Gehäuse (12) einer Luftdüse (11) mit einer vorderen Luftaustrittsöffnung (14) und einem Anschluss an einem Luftzuführungsschacht, wobei die Lamelle (17) als Verbundbauteil aus einer Tragstruktur (27) und zumindest einer die Tragstruktur (27) zumindest abschnittsweise umgebenden Umhüllung (28) hergestellt ist und sowohl die zumindest eine Tragstruktur (27) als auch die Umhüllung (28) aus Kunststoff bestehen, **dadurch gekennzeichnet,**
- **dass** die Tragstruktur (27) aus einem nicht galvanisierbaren Kunststoff und die zumindest eine, wenigstens abschnittsweise ausgebildete Umhüllung (28) aus einem galvanisierbaren Kunststoff hergestellt ist,
- **dass** die wenigstens abschnittsweise ausgebildete Umhüllung (28) eine Galvanisierungsschicht (29) umfasst und
- **dass** auf der Galvanisierungsschicht (29) zumindest ein Metallüberzug (31) oder eine Lackschicht vorgesehen ist.

2. Lamelle nach Anspruch 1, **dadurch gekennzeichnet, dass** die Galvanisierungsschicht (29) als vernickelte oder verkupferte Schicht hergestellt ist.

3. Lamelle nach Anspruch 1 oder 2, **dadurch gekennzeichnet, dass** der zumindest eine Metallüberzug (31) aus Kupfer, Nickel, Chrom oder Gold besteht.

4. Lamelle nach einem der vorhergehenden Ansprüche, **dadurch gekennzeichnet, dass** die zumindest eine Umhüllung (28) aus galvanisierbarem Kunststoff sich zwischen den Stirnseiten (21) der Lamelle (17) durchgehend und in Umfangsrichtung sich zumindest teilweise erstreckt.

5. Lamelle nach einem der vorhergehenden Ansprüche, **dadurch gekennzeichnet, dass** die Umhüllung (28) als eine dünne Schicht, insbesondere schalenförmige Schicht, ausgebildet ist.

6. Lamelle nach einem der Ansprüche 1 bis 4, **dadurch gekennzeichnet, dass** das Volumen der Umhüllung (28) größer als das Volumen der Tragstruktur (27) ausgebildet ist.

7. Lamelle nach einem der vorhergehenden Ansprüche, **dadurch gekennzeichnet, dass** an den jeweiligen Stirnseiten (21) der Lamelle (17) Lagerzapfen (22) angeordnet sind, die aus nicht galvanisierbarem Kunststoff ausgebildet sind.

8. Lamelle nach einem der vorhergehenden Ansprüche, **dadurch gekennzeichnet, dass** die Tragstruktur (27) ohne Zusatzstoffe versteifungsfrei ausgebildet ist.

9. Lamelle nach einem der vorhergehenden Ansprüche, **dadurch gekennzeichnet, dass** das aus der Tragstruktur (27) und der zumindest einen Umhüllung (28) bestehende Verbundbauteil als Zwei- oder Mehrkomponenten-Spritzgussteil hergestellt ist.

10. Lamelle nach einem der vorhergehenden Ansprüche, **dadurch gekennzeichnet, dass** die zumindest eine Umhüllung (28) aus PC/ABS oder ABS hergestellt ist.

11. Lamelle nach einem der vorhergehenden Ansprüche, **dadurch gekennzeichnet, dass** die Tragstruktur (27) aus PC hergestellt ist.
